(19) **Europäisches Patentamt**

**European Patent Office**

**Office européen des brevets**

(11) **EP 1 433 057 B1**

(12) **EUROPEAN PATENT SPECIFICATION**

(45) Date of publication and mention
of the grant of the patent:
**19.10.2005 Bulletin 2005/42**

(51) Int Cl.⁷: **G06F 9/50**

(21) Application number: **02776524.7**

(86) International application number:
**PCT/GB2002/002016**

(22) Date of filing: **02.05.2002**

(87) International publication number:
**WO 2002/099555 (12.12.2002 Gazette 2002/50)**

(54) **REAL TIME PROCESSING**

ECHTZEITVERARBEITUNG

TRAITEMENT EN TEMPS REEL

(84) Designated Contracting States:
**AT BE CH CY DE DK ES FI FR GB GR IE IT LI LU MC NL PT SE TR**

(30) Priority: **07.06.2001 GB 0113844**

(43) Date of publication of application:
**30.06.2004 Bulletin 2004/27**

(73) Proprietor: **Marconi UK Intellectual Property Ltd Coventry, CV3 1HJ (GB)**

(72) Inventors:
• **COLLETT, Paul**
  **Dorset DT10 2BX (GB)**
• **JENSEN, Bruce, Philip**
  **Dorset BH21 1QA (GB)**
• **MARTIN, Stephen, Ian**
  **Dorset BH17 7XR (GB)**

(74) Representative: **Stasiewski, Piotr Grzegorz**
  **Marconi Intellectual Property**
  **New Century Park**
  **Post Point 51**
  **Coventry, West Midlands CV3 1HJ (GB)**

(56) References cited:
• **J. MURPHY: "Resource allocation in ATM networks" REPORT FOR THE DEGREE OF PHD, [Online] 29 April 1999 (1999-04-29), pages 1-6, XP002269005 DUBLIN CITY UNIVERSITY Retrieved from the Internet: <URL:http://web.archive.org/web/1999042908 3125/http://www.eeng.dcu.ie/~murphyj/the/t he/the.html> [retrieved on 2004-02-02]**
• **HLUCHYJ M G ET AL: "A second-order leaky bucket algorithm to guarantee QoS in ATM networks" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18 November 1996 (1996-11-18), pages 1090-1096, XP010220088 ISBN: 0-7803-3336-5**
• **MAYOR G ET AL: "The multi-level leaky bucket mechanism" COMPUTER COMMUNICATIONS AND NETWORKS, 1995. PROCEEDINGS., FOURTH INTERNATIONAL CONFERENCE ON LAS VEGAS, NV, USA 20-23 SEPT. 1995, LOS ALAMITOS, CA, USA,IEEE COMPUT. SOC, US, 20 September 1995 (1995-09-20), pages 380-387, XP010200348 ISBN: 0-8186-7180-7**

**Description**

The present invention relates to a transaction processing system comprising a leaky bucket.

There are known in the art solutions that use the leaky bucket concept, e.g. described in the paper by M. G. Hluchyi and N. Yin "A second-order leaky bucket algorithm to guarantee QoS in ATM networks" - Global Telecommunications Conference, 1996; GLOBECOM '96; pages 1090-1096 discusses how two standard leaky bucket algorithms can enforce long-term traffic characteristics. The first bucket enforces the traffic rate and the second enforces the maximum traffic burst. Another document that relates to leaky bucket algorithm is "Resource allocation in ATM networks" by J. Murphy. However operations as in the invention now to be described is neither disclosed nor suggested in the prior art documents.

According to a first aspect of the present invention there is provided a transaction processing system comprising a leaky bucket and a flow control means, the flow control means being arranged to monitor the response time of each transaction and to compare each response time with a predetermined response time, wherein at least two different values of the predetermined response time are used for different transactions, and to increment the contents of the leaky bucket when a response time of a transaction exceeds the predetermined response time associated with the particular transaction, and the flow control means is arranged to monitor the content of the leaky bucket and to reject transactions in proportion to the contents of the leaky bucket.

According to a second aspect of the present invention there is provided a method of operating a transaction processing system.

Further features of the present invention are as claimed in the dependent claims.

The present example will now be described by way of example, with reference to the accompanying drawings, in which:-

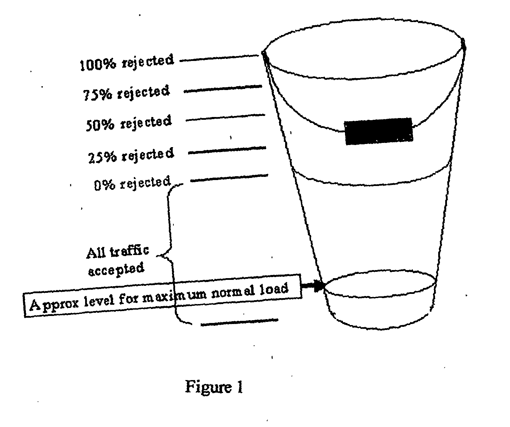

Figure 1 shows a graphical representation of a "leaky bucket" to illustrate the functioning of the invention;
Figure 2 illustrates a single box SCP (Service Control Point) architecture assumed for the simulation;
Figure 3 illustrates a multibox SCP(C)/SDP (Service Data Point) architecture assumed for the simulation;
Figure 4 shows an example histogram of the distribution of response times. This represents the response times in ms of a one-read service run at a processor occupancy of around 70% on the single-box SCP simulation;
Figure 5 illustrates the linear relationship between the variable x= occupancy/(1 - occupancy) and y= 95% response time in ms. x=1 corresponds to 50% occupancy;
Figure 6 illustrates the linear relationship between the number of reads $n_r$= 1,2,3,4,5 and the 95% 'queuing' time $T_q$;
Figures 7A - 7B illustrate a one-write service on the single-box SCP simulation. The approximately linear relationship between the variable x=occupancy/(100-occupancy) and the 95% response time in ms (y-axis), for data measured on the SCP simulation;

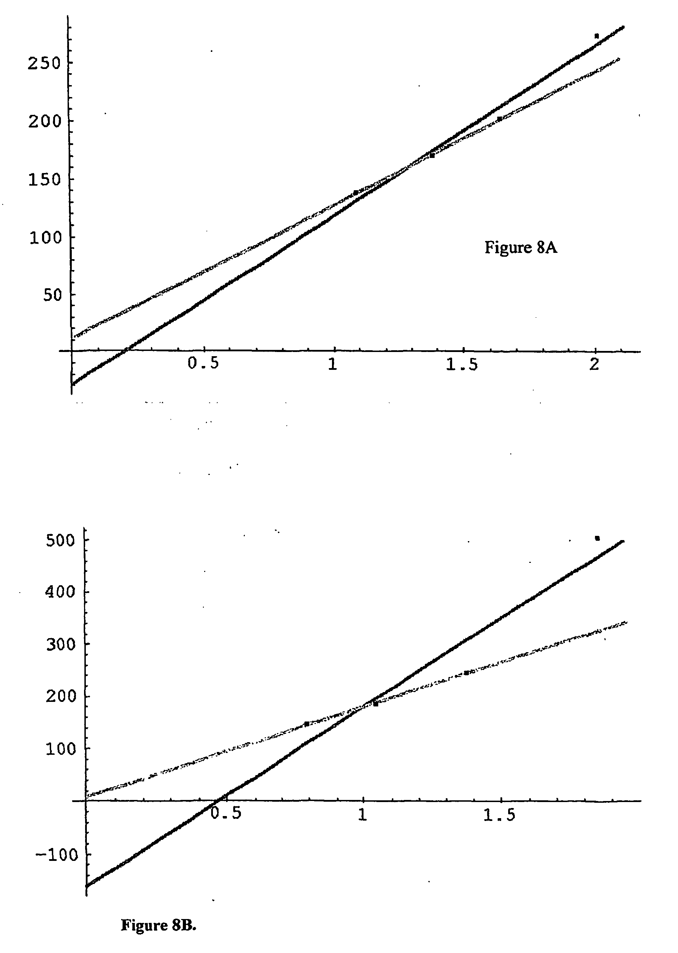

Figures 8A and 8B illustrate linear fits as in Figures 7A -7C with a two-write service (8A) and a three-write service (8B);
Figures 9A - 9C illustrate the approximately linear relationship between the variable x=occupancy/(100-occupancy) and the 95% response time in ms (y-axis), for data measured on a real single-box SCP. Figure 9A is a one-read service, Figure 9B is a one-read, one-write service and Figure 9C is a 12-read, 1-write service;
Figures 10A - 10D illustrate the 95% time delay (y axis) vs. occupancy/(1-occupancy) (x axis)for 1,3,5, and 8 reads respectively. Occupancy is the cpu occupancy of the (Master) SDP and the configuration was: 2 SCP(C)s (2 processors each) and 2 SDPs (Master/Slave) (2 processors each);
Figure 11 illustrates the 95% time delay (y axis) vs. occupancy/(1-occupancy) (x axis) for 1 read. The configuration was: 4 SCP(C)s (2 processors each) and 2 SDPs (Master/Slave) (2 processors each);
Figures 12A -12C illustrate the performance of a leaky bucket and a traffic mix A, in which;

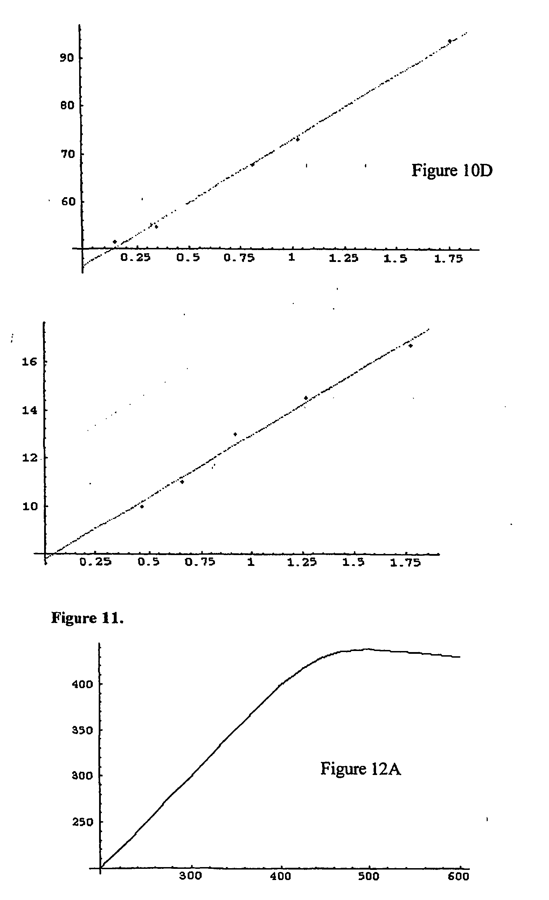

Figure 12A shows carried traffic (y axis) vs. offered traffic (x axis) (calls/sec);

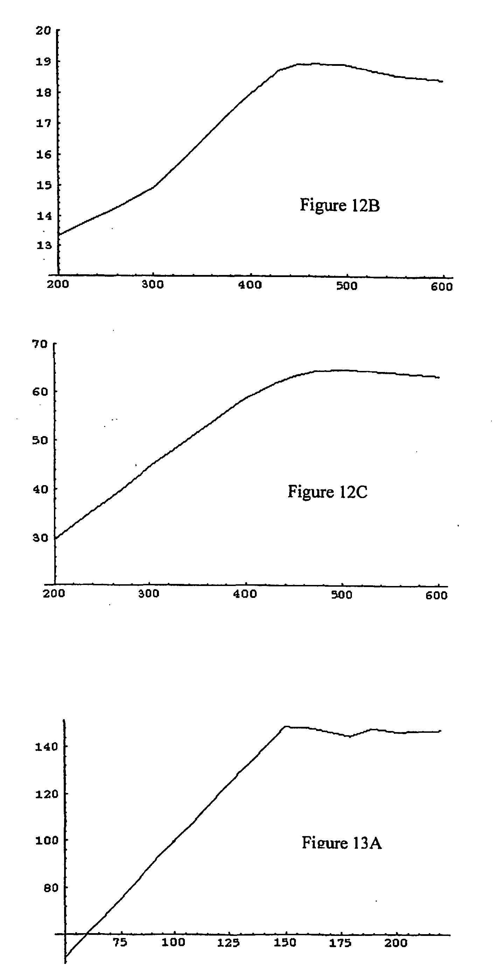

Figure 12B shows mean response time (ms) vs offered traffic rate (calls/sec; and
Figure 12C shows SCP (master) cpu occupancy (percent) as a function of offered traffic rate (calls/sec)

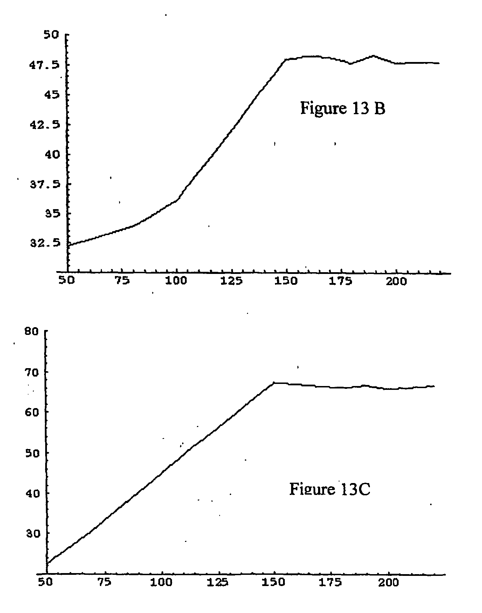

Figures 13A -13C illustrate the performance of a leaky bucket and traffic mix B, in which;
Figure 13A shows carried traffic (y axis) vs. offered traffic (x axis) (calls/sec);
Figure 13B shows mean response time (ms) vs offered traffic rate (calls/sec);and
Figure 13C shows SCP (master) cpu occupancy (percent) as a function of offered traffic rate (calls/sec).

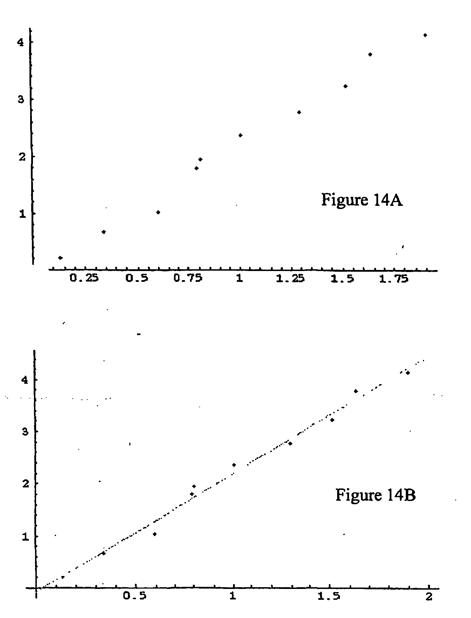

Figure 14A illustrates that plotting the raw data suggests a linear relationship between *x* and *y*; and
Figure 14B illustrates the least-squares formulas being used to plot the best-fit graph *y = a + bx* through the points in Figure 14A.

Firstly, there will be described a practical example of the invention.

The problem concerns the vice-president of a bank. The bank runs a customer call-centre in Sunderland which covers the entire country. The vice-president would like to get an idea of how busy the call-centre is, and what kind of service most customers are getting, but doesn't trust the manager of the call-centre to give him accurate information. There's a good way to obtain the information without leaving the London office. He could phone the call-centre several times a day and make a note of how long he has to wait before getting an answer. That is, he writes down the total seconds of ringing + annoying 'please hold' music, plus the length of the transaction (checking an account balance).

If he always has to wait a long time, it means that the call-centre is very busy. If he gets an answer always on the second ring and the transaction is prompt, he can probably downsize some staff.

It's likely that he will get a mixture of times, which means that the call-centre is busy but not too busy.

That is, the delay time, if sampled frequently, will give an idea of the occupancy of the

remote server without having to directly query it. It turns out that customers are starting to complain about long wait times at certain times of the day.

The vice-president would like to control the amount of work coming into the call-centre. One problem is downtime due to hourly coffee breaks. He installs a system where he can control the switchboard from his office in London. He decides to institute this system: every time a call comes in, he puts a bean in a bucket. Every time a customer hangs up, he takes a bean out. If the bucket becomes full, he changes the phones so that a 'call back later' announcement is played to customers. This guarantees that, if all the call-centre employees take their coffee breaks at the same time, not too many customers are inconvenienced.

By adding a constant amount to the bucket every time a call comes in, the bucket will eventually fill up when the remote server fails, and calls can be rejected.

But this system only works in case of total failure. The vice-president would like to reject traffic (play the 'phone back later' announcement) if the call-centre occupancy is getting too high.

He is worried about over-stressing his employees if he runs them near 100%, which could result in union problems or even court action. He knows from his earlier experiments that showed him that occupancy is high, when the ringing-plus-music wait times are getting too long. He decides to record total times (waiting plus service time) at the maximum legal occupancy (70%). He finds that there are a range of times from 30 seconds to 5 minutes, but 95% of calls are less than 2 minutes. So he decides to do this: for every call that takes longer than 2 minutes he puts a bean in the bucket. That way, if the calls are getting too long, the bucket will fill up and he will invoke the rule about rejecting traffic.

But there is a problem with this scenario. What about the 5% of calls that are long even when the call-centre is at or below the legal occupancy? If the call-centre is running at 70% occupancy, then 5% of calls (the calls that are longer than 2 minutes) will result in a bean going into the bucket (and staying there).

Eventually the bank president found that the bucket filled up and, following his rule, he was obliged to reject calls. He decided to change the system somewhat: he instituted a 'leak'.

Every so often he would take some beans out of the bucket. He calculated the leak rate by simply saying that it was the average rate at which beans go into the bucket at the maximum sustainable customer calling rate. If he made the maximum sustainable rate the balancing point, at which the rate of beans going into the bucket was equal to the rate of them coming out, then he would be assured that, whenever the customer calling rate was over the maximum, more beans would go in than would leak out, and the bucket would fill up.

To be more specific, he has 100 low-paid workers in the call-centre. He wants, at maximum, for 70 to be occupied at any one time. He finds that the average call lasts 1 minute and that 95% are less than 2 minutes at 70% occupancy. 70% occupancy occurs when the call rate is 70 per minute. At that calling rate, there are 3.5 calls every minute that are longer than 2 minutes. (3.5 is 5% of 70). The rule is that every call later than 2 minutes must pay a penalty by putting a bean into the bucket. So that means that, according to his rules, he puts 3.5 beans per minute into the bucket when the calling rate is 70 calls/min. He takes 3.5 beans per minute out of the bucket, so that, on average, the bucket stays at the same level, which is about one-tenth full.

Now the call rate increases to 80 calls/minute. The employees are more stressed and less efficient and there are more customers waiting for a free line, so the average call time goes up to 1.1 minutes and more than 20% of calls are longer than 2 minutes. The occupancy goes up to 80%. But now the regulatory system of the bucket comes into force. Since he is still applying the 2-minute penalty rule, he is now putting 20% *80 calls/min =16 beans/min into the bucket. Since only 3.5 beans/min are leaking out, the bucket fills up after a few minutes (exactly how many minutes depends on the size of the bucket) and then calls start to be rejected. Once calls are rejected, the (admitted) call rate goes down, the occupancy and call time decrease, and the situation stabilizes again at around 70% occupancy. What happens when the call rate is 50 calls/minute? At that rate, the average time is still roughly 1 minute but only 1% of calls are longer than 2 minutes. So there is only 0.5 (1% of 50) beans/minute going into the bucket. But there are still 3.5 beans/minute leaking out. So the bucket is almost empty most of the time.

This algorithm uses the service+waiting times to control traffic. Late times mean a penalty is added to the bucket. When the bucket fills, new traffic is rejected. There is a leak, so that the bucket is prevented from filling by means of occasional long times when traffic is light. There is just one more refinement. The bank vice-president finds the 'all or nothing' rejection algorithm a bit too severe. So he institutes a rejection zone in the bucket. The proportion of traffic rejected will be given by the proportion of the rejection zone which is below the level of beans in the bucket. For example, suppose that the rejection zone is the top half of the bucket. When the bucket is less than half-full, no traffic is rejected. When the bucket is ¾ full, 50% of traffic is rejected. When the bucket is 90% full, 80% of traffic is rejected. When the bucket is 100% full, 100% of traffic is rejected.

The traffic is rejected according to the proportion of the bucket rejection zone covered by the bucket level.

Now some more complications are introduced. The telephone service, with average holding time of 1 minute, was a simple account query service. The bank introduced new services, which allowed callers to apply for new accounts, purchase foreign currency, etc., on the phone. The system of rejecting traffic breaks down until it is realised that calls can be sorted into categories:

| type of call | average time*: | 95% of calls are shorter than*: |
|---|---|---|
| account query | 1 min | 2 min |
| loan status query | 2 min | 4.5 min |
| new account application | 30 min | 35 min |

\* these times are measured at 70% occupancy

It is decided that, for each category, one penalty bean will be put in the bucket if the call is longer than its '95% time' for that type of call.

Now there is trouble. Because of a give-away offer, there is a flood of new account applications by phone. Since the average time is 30 minutes, a call-rate of 3.3 calls/minute is enough to occupy 100 workers in the call-centre full-time. The call-centre is completely occupied all the time. But it is found that the bucket isn't filling up.

An investigation reveals that every single call is late, and so 3.3 beans/minute are going into the bucket. But the bucket is still leaking out at a rate of 3.5 beans/minute. The bucket remains nearly empty, and no calls are ever rejected. This represents a breakdown in the protection mechanism, and so it must be modified.

It is decided to give a 'weight' factor to the penalty, so that the more time-consuming calls contribute a bigger penalty than the relatively light calls. The weight factor is chosen so that, for each individual type of call, the rate of beans flowing into the bucket at the maximum call-ate (i.e., the call rate when the centre is 70% occupied) is exactly balanced by the leak-rate. For example, suppose that 100% of calls are new account applications. Then the call-centre will be 70% occupied at a call rate of 2.33 calls/minute. If 5% of calls are late, then that means that: 0.05*2.33** penalty = 3.5 or penalty = 30.

For every late call of this type 30 beans must be put into the bucket. This makes sense, since this type of call 'costs' 30 times what a simple 1-minute call costs. Both the predicted late times and the penalties depend on the type of call. The penalty is proportional to the cost of the call.

Numerical simulations of an SCP/SDP architecture are used to investigate a Switch-Control leaky bucket load control algorithm. This algorithm takes into account the number of individual reads and writes within one service to predict a response time. If the request is returned to Switch Control later than that time, then penalty tokens are added to a counter (the bucket). If the level of the bucket is higher than a fixed value, a proportion of new traffic is rejected. This proportion rises with the bucket level - when the bucket is completely full, all traffic is rejected. The bucket periodically leaks tokens for two reasons:

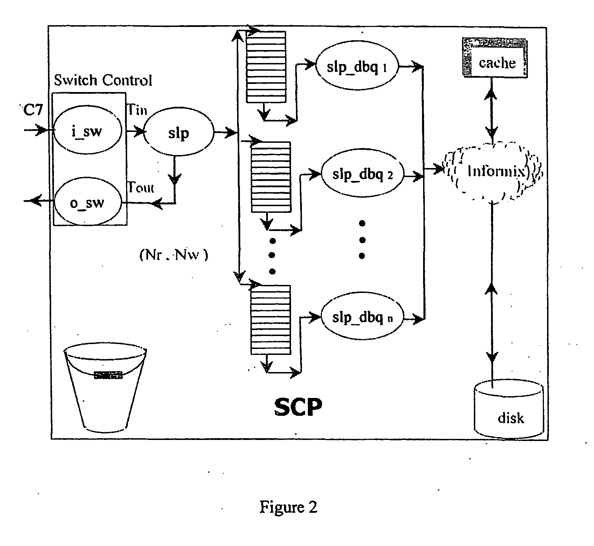

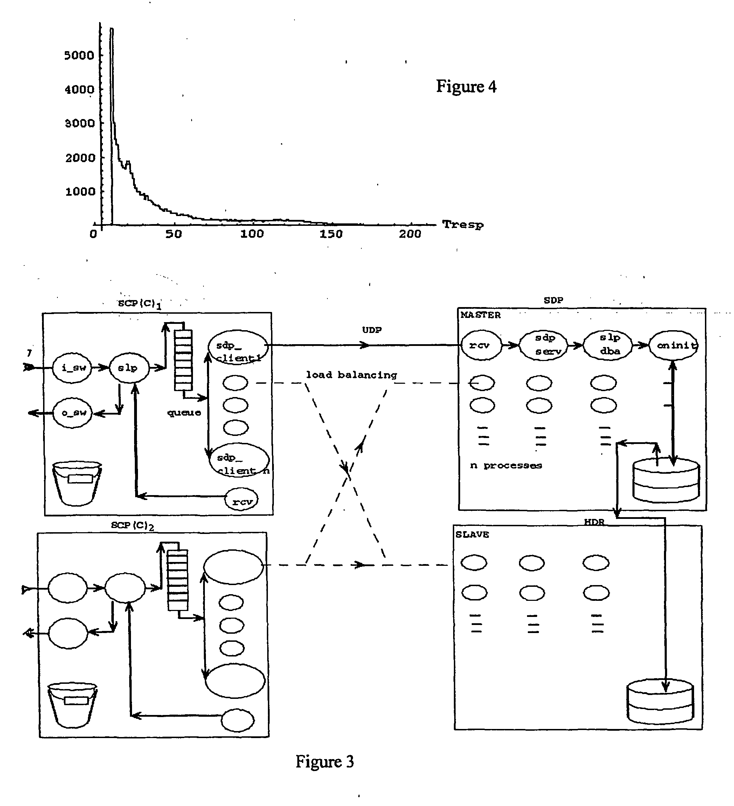

1) spurious tokens which are accumulated during periods of light traffic must be leaked away, and
2) the bucket must be able to leak itself out of overload caused by a traffic burst. This algorithm is examined for the architectures shown in Figures 2 and 3. In Figure 2 the SCP and SDP are residing in a single Unix box. In Figure 3 several dual-cpu SCP(C) boxes send requests over a communications link to two multi-cpu SDP boxes (master and slave).

The single-box SCP simulation model was used to measure the response times and processor occupancies as functions of the traffic rate for various types of traffic. It is shown how these measurements are used to establish the input data for the leaky bucket algorithm.

Using preliminary measurements of the software processes given in Tables 1 and 2, a simple simulation model was written for the architecture of Figure 3. The model was run with overload switched off to measure the response times and processor occupancies as functions of the traffic rate for different traffic types.

It was also used to investigate other issues. Of particular interest was the choice of the number of sdp-client software processes. This number is configurable and if it is too small can strongly affect performance.

The data from the model runs was in turn used to calculate the input parameters for a leaky bucket model, that is, the coefficients in the formulas for the target response time and the penalty for the different services. This configuration data was fed back into the model and the model was then run with overload active for various types of traffic, including 'realistic' traffic mixes, differing numbers of SCPs and differing number of SDP cpus.

The target response time and the penalty can be calculated using simple linear equations. The process used to find the coefficients for these equations is described in detail, both in the measurements that must be made and the technique for getting the best-fitting equation. To a great extent, this process can be automated.

The linear equation for the penalties is expected to apply in all circumstances. The linear equation for the target response times breaks down in certain cases, which are discussed later.

The threshold response time $T_{target}$ is picked to correspond to the 95% point in the distribution of response times when the processor occupancy is at the desired maximum. When the term 'processor occupancy' is used, the overall occupancy on the one-box architecture and the SDP cpu occupancy on the multi-box architecture are meant. That is, suppose that the desired maximum occupancy is 66%. When the cpu is 66% occupied, 95% of the response times are less than Ttarget. For example, on Figure 4, which shows the histogram of response times for a one-read service run at 220 calls/sec on the SCP simulation model, the 95% time is approximately 120 ms. This is close to $T_{target}$. The graph actually shows the response-time histogram for a traffic rate corresponding to 70% cpu occupancy. Using trial and error to find the traffic rate that gives an occupancy of exactly 66% is difficult.

Here it is shown that the response time $T_{response}$ can be calculated as a function of occupancy by the following formula:

$$T_{response} \cong T_0(n_r, n_w) + T_q(n_r, n_w) \times occupancy/(1- occupancy)$$

where $T_0(n_r, n_w)$ and $T_q(n_r, n_w)$ depend on the number of reads and writes and must be measured.

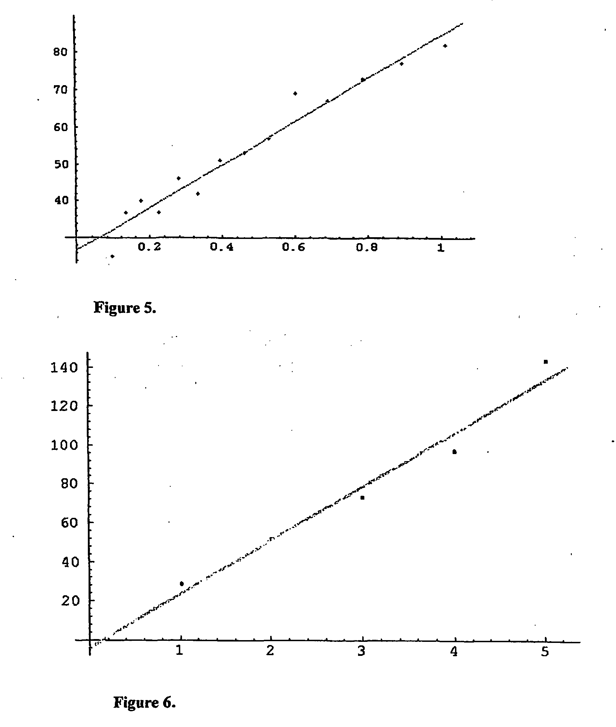

There is a third category of action, which is a failed read or write. Although this is included in the algorithm, the dependence of $n_r$ is ignored in the following discussion. To get $T_{target}$, the occupancy to the desired cpu occupancy, which is taken here to be 66%, in the above formula. Rather than justifying this formula mathematically, it is simply noted that it gives good results for the available data (see Figure 5). Details are discussed later.

If the number of penalty tokens added to the bucket is independent of the service, there is an obvious problem with maintaining a consistent overload strategy. Consider the following example: A one-read service puts in 100 penalty tokens if the response time is greater than 142 ms. 5% of response times will be greater than this when the call rate corresponds to a cpu occupancy of 66%. This traffic rate is 202 calls per second. At 202 calls/sec, the rate at which tokens are going into the bucket is .05 x 202 x 100 $\cong$ 1000 tokens/sec. Suppose the bucket then has a leak rate of 1000 tokens/sec, so that the bucket level stays roughly constant at that traffic rate-every second, the same number of tokens are going into the bucket as are leaking out. If the traffic rate goes up, then the bucket will fill up, the overload rejection algorithm will be switched on and traffic will begin to be rejected.

Now imagine traffic consisting of only a 3-read service. The traffic level corresponding to 66% cpu occupancy is roughly 91 calls/sec. At this rate, if the same '100 tokens per late response' rule were applied, the rate of tokens going into the bucket would be roughly 500 per second. But the bucket is set to leak at 1000 per second. In this case the bucket is leaking twice as fast as it is being filled, and the system has little chance to be pushed into overload, even though the traffic level is at the maximum.

Therefore, the number of penalty tokens added to the bucket must be proportional to the cpu cost of the service - a three-read service must put in more tokens per late response than a one-read service.

The formula for the size of the token is:

$$(leak\ rate)/[(call\ rate\ at\ maximum\ occupancy \times 0.05] = token\ size$$

In the following a leak rate of 1000 tokens/sec is assumed.

Table 1 shows an analysis of $n_r$-read runs ($n_r$ =1,..., 5) on the SCP simulation model.

Table 1

| No. of reads | (points used) | $T_0$ | $T_q$ | $T_{target}$ at 66% | cost (ms) | $R_{T66}$ calls/sec | token size |
|---|---|---|---|---|---|---|---|
| 1 | 8 | 50.2 | 28.61 | 107.4 | 6.61 | 202 | 100 |
| 2 | 13 | 42.43 | 51.59 | 145.6 | 10.57 | 126 | 160 |
| 3 | 10 | 43.69 | 73.18 | 190 | 14.57 | 91.45 | 220 |

Table 1   (continued)

| No. of reads | (points used) | $T_0$ | $T_q$ | $T_{target}$ at 66% | cost (ms) | $R_{T66}$ calls/sec | token size |
|---|---|---|---|---|---|---|---|
| 4 | 7 | 42.74 | 97.15 | 237 | 18.58 | 71.72 | 280 |
| 5 | 7 | 29.5 | 143.47 | 316 | 222.78 | 58.51 | 340 |

Here $R_{T66}$ is the traffic rate at 66% occupancy, and cost is given by the formula

cost = number of cpus x 1000 ms/sec x occupancy/(call rate in calls/sec)

The cost is measured in milliseconds.

This table suggests, as might be expected, that $T_0$ is roughly constant, with an average (ignoring the 5-read value) of 45 ms and Tq is a linear function of the number of reads. The best fit to the data (calculated by the least-squares method as explained later) gives Tq ≅ 27.5 n - 3.8. But looking at Figure 6 and Table 1, it is seen that that the 5-reads point seems slightly off - the Tq seems too high and $T_0$ seems too low. If the 5-reads point is not included, there is almost a perfect fit of the remaining 4 points with the formula Tq = 22.7 n + 5.8.

One goal was to find a means of calculating the target response time $T_{target}$ via a formula. A formula for the 95% response time for an arbitrary number of reads and cpu occupancy is:

$$T_{response}(n, occupancy) = 45 + (22.7 n + 5.8) \times (occupancy/(1-occupancy)).$$

If an occupancy of 66% is assumed, then Table 2 is arrived at. In this table $T_{target}(n) = 45 + 2 (22.7 n + 5.8)$ calculated with the formula with the Ttarget from the above table for $n_r = 1,2,3,4,5$ are compared. [Note that occupancy = 66% so that (1-occupancy)/occupancy = 2]

Table 2

| $n$ | 45 + (22.7 n + 5.8) $\times$ 2 | $T_{target}$ |
|---|---|---|
| 1 | 102. | 107.4 |
| 2 | 147.4 | 145.6 |
| 3 | 192.8 | 190 |
| 4 | 238.2 | 237 |
| 5 | 283.6 | 316 |

Although the predictive power of this formula is not bad, it seems that the formula breaks down for $n_r = 5$. It seems that a simple linear formula, while good in general, may not be good enough to calculate the threshold response time accurately for all services, and the target response times must be measured individually. Following sections show a similar conclusion for the multi-box case.

All the above analysis should be equally valid if $n_w$-write services instead of $n_r$-read services are examined. That is, although a write is more time consuming than a read, the same functional relationships between call rate, occupancy and 95% response time should hold.

Here some data from the SCP simulation for a 'long read' service is presented, which, for these purposes is called a *write*.

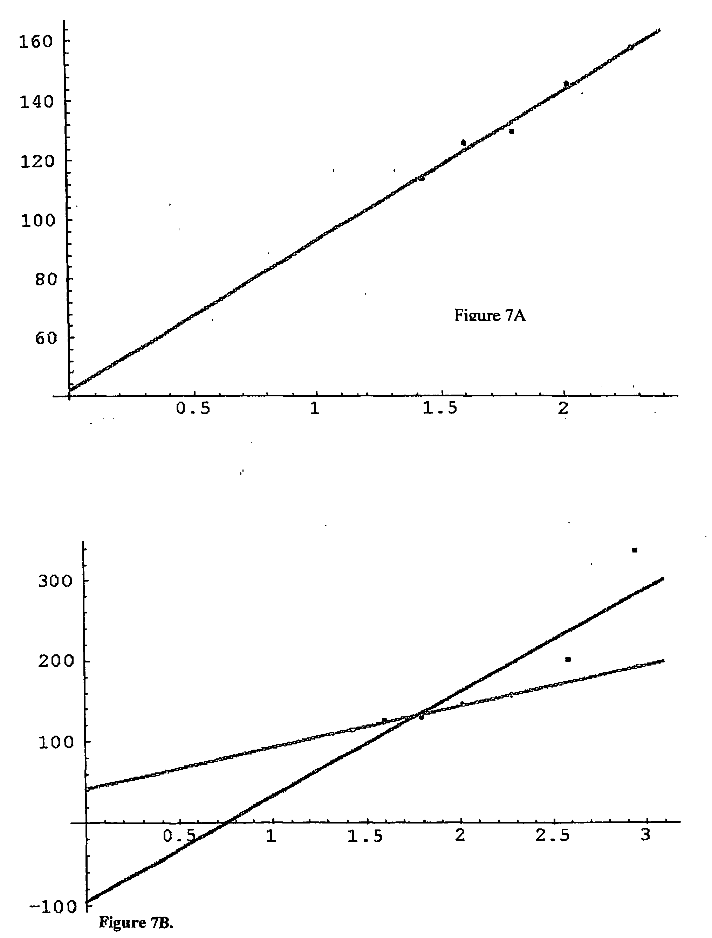

The model was run at several different traffic rates for one, two and three writes. This data was then analysed to extract the coefficients for the leaky bucket algorithm. In doing so data points at high occupancies were eliminated, in order to get a reasonable linear fit (Figure 7).

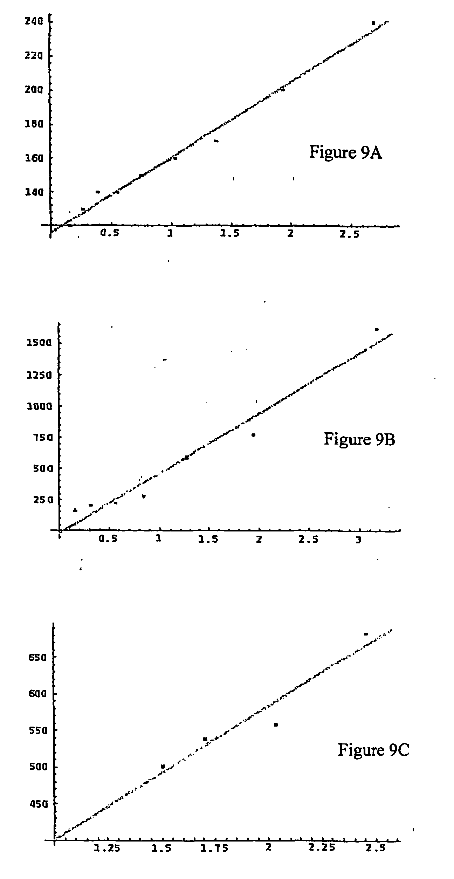

The previous analysis is totally dependent on there existing certain relationships between the call-rate, occupancy and response times. It is seen that the SCP simulation data fits these relationships fairly well. It is interesting to see if real data collected on the SCP gives the same kind of relationships as the model. Here the results of some measurements collected on a single-box SCP model give graphs for three different services (Figure 9). The data are for a one-read (Benchmark 5) and a one-read & one -write service (Benchmark C). The third service was for a long and expensive service consisting of 12 reads and 1 write. The data is given below. The graphs indicate that there is indeed a linear relationship between the occupancy and the call-rate and a linear relationship between the variable x=occupancy/(100-occupancy) and the 95% response time.

Table 3.

| call rate (cps) | occupancy (%) | 95% response time (ms) |
|---|---|---|
| 14.048 | 60 | 501 |
| 14.88 | 63 | 538 |
| 17.066 | 67 | 558 |
| 17.959 | 71 | 684 |

Considering the architecture shown in Figure 3, a call arrives at the SCP(C) and is passed on to the slp (service logic program). Suppose the call requires two database accesses: one read and one write. The sip assigns the read request to the next sdp-client process, which is labelled $k$, and the request joins the queue $k$. The sdp-client process sends the request to one of the SDP boxes, alternating between the master and slave. The request passes through the software processes rev, $sdb\text{-}serv_k$, $slp\text{-}dba_k$, and the Informix database-access process $oninit_k$. For the purposes of simulation, it is assumed that each software process takes a fixed amount of cpu time except for the database access, where a Poisson-distributed time is assumed. Of course, the request incurs queueing delays when the processes must queue for cpu time.

Timings for the various software processes were made on the SCP/SDP model and are shown in Tables 4-6 below. There were runs made for a one-read and a one-read/one-write service. The timing for a one-write service was inferred by taking the difference.

Table 4

| SCP(C) | i-sw | o-sw | slp | slp-client | rcv | total |
|---|---|---|---|---|---|---|
| 1 read/0 writes | 0.85 | 0.988 | 1.45 | 0.91 | 0.42 | 4.618 |
| 1 read/1 write | 0.85 | 0.988 | 2.20 | 1.85 | 0.849 | 6.737 |
| (0 reads/1 write) | 0.85 | 0.988 | 1.45 | 0.94 | 0.42 | 4.648 |

Table 5

| SDP (master) ms | Rcv | sdb-serv | Dba | oninit | total |
|---|---|---|---|---|---|
| 1 read/0 writes | 0.42 | 0.77 | 0.86 | 1.14 | 3.19 |
| 1 read/1 write | 0.85 | 1.81 | 3.03 | 9.8 | 15.49 |
| (0 reads/1 write) | 0.42 | 1.04 | 2.17 | 8.66 | 12.29 |

Table 6

| SDP (slave) ms | rcv | sdb-serv | dba | oninit | |
|---|---|---|---|---|---|
| 1 read/0 writes | 0.36 | 0.81 | 0.89 | 1.59 | 3.65 |
| 1 read/1 write | 0.89 | 1.73 | 3.14 | 12.3 | 18.06 |
| (0 read/1 write) | 0.53 | 0.92 | 2.25 | 10.71 | 14.41 |

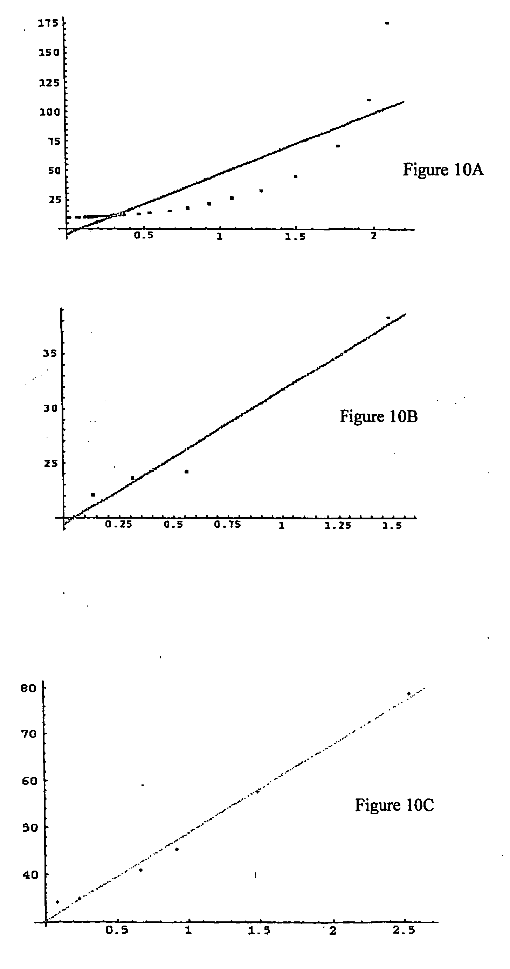

To calculate the bucket input parameters the model was run at different traffic rates for services consisting of 1, 3, 5, and 8 reads. The plots of the 95% response times as functions of
X = occupancy/(1-occupancy) are shown in Figure 10.

Note that the 1-read linear fit is not very good. The reason is the following: in the plots occupancy is the cpu occupancy of the SDP. That is, the delay is presumed to come from queueing for cpu time on the SDP. But for a one-read service the cpu cost of a call is 4.618 ms on a SCP(C) and 3.19 ms on an SDP, which means that the occupancy on a two-box, 2 cpu-per-box SCP(C) will be greater than a two-box, 2 cpu-per-box SDP. So, for high traffic, the most significant delay comes from queueing for cpu time on the SCP(C) and not from queueing on the SDP. This effect skews the predictions of the program to find the best-fit formula for the response times. The Mathematica-generated table of the formulas and predictions using the data displayed in Figure 9 (excluding data from the write runs) (Mathematica is a Registered Trade Mark for a software program, owned by Wolfram Research Inc.):

```
Formula for TR95 is TR95= 69.733 + 1.85971 * nreads

Formula for penalty token size is token = 0.327565 + 23.8191 * nreads

------------------------
  which gives the table:
------------------------
No. reads  T_95 (measured) T_95 (predicted) token (measured) token (predicted)
1          98.7617         71.5927          23.9156          24.1467
2          ...             73.4524          ...              47.9658
3          44.0841         75.3121          71.926           71.7849
4          ...             77.1718          ...              95.604
5          67.6836         79.0315          119.491          119.423
6          ...             80.8912          ...              143.242
7          ...             82.7509          ...              167.061
8          100.017         84.6106          191.065          190.88
9          ...             86.4703          ...              214.699
10         ...             88.33            ...              238.519
```

The predictions for $T\_95(T_{target})$ are not very good. If the dataset read is eliminated from the input, the table is as follows:

```
Formula for Ttarget is Ttarget= 11.1049 + 11.1544 * nreads

Formula for penalty token size is token = 0.850048 + 23.7326 * nreads

--------------------------
  which gives the table:
--------------------------
No.
reads Ttarget (meas'd) Ttarget (pred'd) token (meas'd) token (pred'd)
1          ...             22.2593          ...              24.5826
2          ...             33.4137          ...              48.3151
3          44.0841         44.5681          71.926           72.0477
4          ...             55.7225          ...              95.7802
5          67.6836         66.8769          119.491          119.513
6          ...             78.0313          ...              143.245
7          ...             89.1857          ...              166.978
8          100.017         100.34           191.065          190.71
9          ...             111.494          ...              214.443
10         ...             122.649          ...              238.176
```

```
Formula for T_target is T_target= 16.212 + 53.5948 * nwrites

Formula for penalty token size is token = 2.38595 + 90.592 * nwrites

-----------------------
which gives the table:
-----------------------
No.
writes  T_target (meas'd)  T_target (pred'd)  token (meas'd)  token (pred'd)
1          69.3647            69.8067            91.627          92.9779
2          124.065            123.402           184.736         183.57
3          ...                176.996           ...             273.62
4          230.37             230.591           365.6           364.754


The coefficients are:
k0 = 1.618
kr = 23.7326
kw = 90.592
-----------------------
The following formulas are approximate, and as a result may need some fine tuning
-----------------------
Tr(nr) = 11.1544 * nr
Tw(nw) = 53.5948 * nw
Cr = 11.1049
Cw = 16.212
```

(The write data is included in the second print-out.) It is clear that if the 1-read measurements are not used by the program, the predictions are much better for the other services. A way around the problem is to treat the one-read service as a special case, filling in 'by hand' the target response time derived from measurements, and using the Mathematica least-squares fit program to give a formula for the $n_r$-read target response times ($n_r >1$). Here then, a target value would be used.

On the other hand it might be argued that the SCP should never be allowed to become more occupied than the SDP, so that if a substantial proportion of the traffic was given by a 1-read service (as is the case for some installations), more SCP boxes should be added. This would have the natural effect of lightening the cpu load on each SCP (C) at an equivalent call-rate. The test data was rerun, with 4 SCP(C) boxes. For this run, there was no special problem with the 1-read service: Figure 11 shows a good linear fit, and the Mathematica output gives

```
Formula for T_target is T_target= 6.18404 + 11.5085 * nreads

Formula for penalty token size is token = 0.511096 + 11.7688 * nreads

-----------------------
which gives the table:
-----------------------
No.
reads  T_target (meas'd)  T_target (pred'd)  token (meas'd)  token (pred'd)
1         18.1253            17.6925           11.9921         12.2799
2         ...                29.201            ...             24.0487
3         40.1035            40.7094           35.9785         35.8174
4         ...                52.2179           ...             47.5862
5         ...                63.7264           ...             59.355
6         ...                75.2348           ...             71.1238
7         ...                86.7433           ...             82.8925
8         98.4249            98.2518           95.3493         94.6613
9         ...                109.76            ...             106.43
10        ...                121.269           ...             118.199
```

The following conclusion may be drawn: if the cost of a service is greater on the SCP than on the SDP then the linear least-squares fit is not valid, and special care must be taken.

A sample bucket run was made where there was a multi-box architecture, with 2 SCP(C)s and a Master-Slave SDP. Each box has 2 cpus. From the last section, the bucket Parameters were established:

$$T_{target} = 11.15 \times n_r + 53.60 \times n_w + (11.10 \times n_r + 16.21 \times n_w)/(n_r + n_w)$$

and

$$penalty = 0.16 + 2.4 \times n_r + 9.06 \times n_w$$

The traffic was the following callmix:

Table 7.

| No. reads | No. writes | percentage |
|---|---|---|
| 1 | 0 | 60% |
| 2 | 0 | 5% |
| 3 | 0 | 25% |
| 4 | 0 | 10% |

Table 8

| No. reads | No. writes | percentage |
|---|---|---|
| 2 | 0 | 73 % |
| 12 | 1 | 22 % |
| 9 | 1 | 5% |

The results are shown in Figure 12 and Figure 13. The carried/offered curve follows the pattern as set out by the ITU. The response time rises sharply with increasing traffic until traffic begins to be rejected, where it reaches a maximum at around 400 calls/sec and begins to decline. The SLP occupancy rises to a maximum and afterwards stays roughly constant.

Both simulation and runs on the (single-box) SCP model suggest that the following formula is valid (Note that the number of failures $n_f$ in the formulas are included here to conform to the algorithm as it is coded on the SCP):

$$T_{target}(n_r, n_w, n_f) = T_r(n_r) + T_w(n_w) + T_f(n_f) + C(n_r, n_w, n_f)$$

where $T_{target}$ is the 95% response time when the processor is at a specified maximum occupancy, $n_r$ is the number of reads in the service, $n_w$ the number of writes and $n_f$ the number of failed reads or writes. In most cases, $T_r$, $T_w$ and $T_f$ can be taken to be linear functions of $n_r$, $n_w$ and $n_f$ respectively. That is:

$$T_r(n_r) \cong t_r \times n_r, \; T_w(n_w) \cong t_w \times n_w, \; T_f(n_f) \cong t_f \times n_f$$

where $t_r$, $t_w$ and $t_f$ are constants that can be calculated using the alternate formula later. $C(n_r, n_w, n_f)$ is an 'averaged intercept' (which should be constant or nearly constant):

$$C(n_r, n_w, n_f) = (n_r c_r + n_w c_w + n_f c_f)/(n_r + n_w + n_f)$$

where $c_r$, $c_w$ and $c_f$ are also given by the least-squares program later. The linear relationship between the target response time and the number of reads and writes seems to break down in the following two circumstances:

1) When traffic consists of calls with a large average number of reads or writes on the single-box architecture.
2) When traffic consists of calls with a small average number of reads (near one) on the multi-box architecture.

In these two cases, the response times seems to be greater than that predicted by the formula, so some 'hand adjustment' may be necessary.

As argued above, the size of the penalty token left in the bucket after a late response must depend on the service. The formula for the penalty is

$$\text{Penalty} = n_r k_r + n_w\, k_w + n_f\, k_f + k_0$$

where again $k_r$, $k_w$, $k_f$ and $k_0$ must be found from measurements on the SCP models using the alternate formula in the program below.

The Mathematica program, which could equally be written in C, takes as input data files read, read2, ..., write1, write2 , ... containing call rates, occupancies, and 95% response times for various services. For example, the file read3 would have the following form:

| 50 | 11.74 | 22.1 |
|------|--------|-------|
| 100 | 23.635 | 23.60 |
| 150 | 35.739 | 24.20 |
| 200 | 48.028 | 30.7 |
| 250 | 59.807 | 38.4 |

which are the call rates, cpu occupancy and 95% response time for several different runs of a 2-read service. The program then calculates, for each service, the penalty and 95% response time for that service at the desired maximum occupancy (maxocc) according to the formula for $T_{target}$. It then uses these values to find the best-fit linear formula for $T_{target}$ and for penalty. Specifically, it gives $k_0$, $k_r$, $k_w$, and the (linear approximation) $T_{target}$ formula. In most circumstances, the parameters given by this method could be directly entered into the configuration data for the SCP.

The data from the SCP numerical model runs were analysed using the least-squares method for finding the best-fit curve.

Consider $n$ data points

$$(x_1, y_1), (x_2, y_2), ..., (x_i, y_i), ..., (x_n, y_n),$$

It is assumed that the variables $x$ and $y$ have a linear relationship $y = a + bx$, where $a$ and $b$ are constants. The individual data points, which are measurements subject to errors, would not necessarily fall along a straight line, but have a small amount of random scatter (see Figure 14).

The best-fit curve, which is the one that minimises the sum of the squares of the distances from the points to the curve, is given by $y = a + bx$, where $a$ and $b$ are given by:

$$a = \bar{y} - b\bar{x}, \quad b = \frac{\Sigma_i x_i y_i - n\overline{x}}{\Sigma_i x_i^2 - n\overline{x}^2},$$

where the barred quantities are the ordinary averages of the $x$ and y values.

The response time $T_R$, which is the time between a database request message being issued and the answering message being received, can be broken down into three parts. The first part is the fixed time due to round-trip travel time of the request/response. The second time is the (varying) time taken by the database access. It can be assumed that the access time obeys a Poisson distribution with a fixed mean. Thirdly, there is the queueing delay: if the database is handling more than one call at a time, a request must wait while those ahead of it in the queue are processed. If these three delays are $T_1$, $T_2$, $T_3$, then:

$$(\text{mean response time}) = T_{(MR)} = T_1 + T_2 + T_3$$

$T_1$ and $T_2$ are constant and can be measured. The interest is in estimating $T_3$, which will depend on the length of the queue.

Consider a general queueing system. Customers arrive, wait in a queue, and are served. If it is assumed that there are Poisson arrivals at rate λ and a Poisson-distributed service time at rate μ, then the queueing time is given by

$$T_{queueing} = \{1/\mu\} \, \{\lambda/\mu/(1 - \lambda/\mu)$$

But for Poisson-distributed traffic, the rates λ and μ are equal to the reciprocals of the inter-arrival time and the service time, respectively. So the formula becomes

$$T_{queueing} = T_s \, \{T_s/T_{in}/(1 - T_s/T_{ia})$$

For this system, $T_s$ is the average time of one database access, and $T_{ia}$ is the inter-arrival time of the requests. Assuming the processor is only doing database access and virtually nothing else, $T_s/T_{ia}$ is simply the proportion of the time the processor is working .... that is, the occupancy. So the queueing time is

$$T_3 = T_{queueing} = T_s \text{ occupancy}/(1\text{-occupancy}).$$

If $T_1 + T_2 = T_0$, and replacing $T_s$ by $T_q$, then the formula is:

$$T_R = T_0(m,n) + T_q(m,n) \setminus x \text{ occupancy}/(1\text{- occupancy}).$$

Although the derivation applies to the mean delay, it seems to be also valid, at least approximately, for the 95% delay.

Here a fuller explanation of how the size of the penalty token might be calculated for a service is given. Let the desired maximum occupancy of the cpu be *maxocc* (set in the above examples to 66%). For an individual service, The call rate which corresponds to a cpu occupancy of maxocc is estimated from a least-square analysis of the data. (Note that occupancy is not simply proportional to the call-rate since there are background tasks which occupy the cpu even in the absence of calls.) From the initial formula, the penalty token is inversely proportional to the call rate. Therefore ,

(Penalty for n reads)/(Penalty for 1 read) = (Max call rate for 1 read)/(Max call rate for *n* reads). The penalty may be expressed equally in terms of the 'cost' of the service, which is the time the service takes on the cpu in milliseconds. Clearly, the call rate, cost and occupancy are related by

$$\text{Call-rate x (cost/1000)} = \text{occupancy}/100$$

where occupancy is in percent (between 0.0 and 100.0). Given the above formula,

$$\text{Penalty} = \text{leakrate x (max occupancy)}/100 \text{ x (cost/1000)}$$

where cost is in milliseconds and max occupancy is between 0.0 and 100.0. It seems intuitively obvious that cost is a linear function of the number of reads of the service $n_r$, giving

$$\text{Penalty} = k_0 + k_r n_r$$

where $k_0$ and $k_r$ are constants to be measured. From the above formula, $k_r$ is just

$$k_r = \text{leakrate x (max occupancy}/100) \text{ x (cost of one read/1000)}$$

$k_0$ is (roughly) the penalty calculated with the cost of a service with no database accesses. It is not necessary to measure the *k*s directly but to calculate them from measurements or the occupancy vs call-rate for different services.

The above has concentrated on services with $n_r$ reads , but the argument can be extended to a more general service, with reads, writes and fails. The final formula becomes

$$\text{Penalty} = n_r k_r + n_w\, k_w + n_f\, k_f + k_0$$

**Claims**

1. A transaction processing system (SCP) comprising a leaky bucket and a flow control means (i_sw, o_sw), the flow control means being arranged to monitor the response time of each transaction and to compare each response time with a predetermined response time, wherein at least two different values of the predetermined response time are used for different transactions, and to increment the contents of the leaky bucket when a response time of a transaction exceeds the predetermined response time associated with the particular transaction, and the flow control means is arranged to monitor the content of the leaky bucket and to reject transactions in proportion to the contents of the leaky bucket.

2. A transaction processing system (SCP) as claimed in Claim 1, wherein the increment is a function of the respective transaction.

3. A transaction processing system (SCP) as claimed in claim 1 or claim 2, wherein said transactions are real-time transactions.

4. A method of operating a transaction processing system (SCP), the processing system comprising a leaky bucket and a flow control means (i_sw, o_sw), the method comprising the steps of:

   (a) monitoring the response time of each transaction;
   (b) comparing each response time with a predetermined response time, wherein at least two different values of the predetermined response time are used for different transactions;
   (c) incrementing the contents of the leaky bucket when a response time of a transaction exceeds the predetermined response time associated with the particular transaction; and
   (d) monitoring the contents of the leaky bucket and rejecting transactions in proportion to the content of the leaky bucket.

5. A method as claimed in Claim 4, wherein the increment is a function of the respective transaction.

6. A method as claimed in claim 4 or claim 5, wherein said transactions are real-time transactions.

**Patentansprüche**

1. Transaktions-Verarbeitungssystem (SCP) mit einem Leaky-Bucket und einem Ablauf-Steuermittel (i_sw, o_sw), wobei das Ablauf-Steuermittel dazu angeordnet ist die Antwortzeit von jeder Transaktion zu überwachen und jede Antwortzeit mit einer vorbestimmten Antwortzeit zu vergleichen, wobei zumindest zwei unterschiedliche Werte der vorbestimmten Antwortzeit für unterschiedliche Transaktionen verwendet werden, und die Inhalte des Leaky-Bucket zu erhöhen, wenn eine Antwortzeit von einer Transaktion die vorbestimmte Antwortzeit in Zusammenhang mit der bestimmten Transaktion übersteigt, und wobei das Ablauf-Steuermittel dazu angeordnet ist, den Inhalt des Leaky-Bucket zu überwachen und Transaktionen im Verhältnis zu den Inhalten des Leaky-Bucket abzulehnen.

2. Transaktions-Verarbeitungssystem (SCP) nach Anspruch 1, bei welchem die Erhöhung eine Funktion der jeweiligen Transaktion ist.

3. Transaktions-Verarbeitungssystem (SCP) nach Anspruch 1 oder Anspruch 2, bei welchem die Transaktionen Echtzeit-Transaktionen sind.

4. Verfahren zum Betreiben eines Transaktions-Verarbeitungssystems (SCP), wobei das Verarbeitungssystem ein Leaky-Bucket und ein Ablauf-Steuermittel (i_sw, o_sw) enthält, wobei das Verfahren die Schritte enthält:

   (a) Überwachen der Antwortzeit von jeder Transaktion;

   (b) Vergleichen von jeder Antwortzeit mit einer vorbestimmten Antwortzeit, wobei zumindest zwei unterschiedliche Werte der vorbestimmten Antwortzeit für unterschiedliche Transaktionen verwendet werden;

(c) Erhöhen der Inhalte des Leaky-Bucket, wenn eine Antwortzeit von einer Transaktion die vorbestimmte Antwortzeit in Zusammenhang mit der bestimmten Transaktion übersteigt; und

(d) Überwachen der Inhalte des Leaky-Bucket und Ablehnen von Transaktionen im Verhältnis zum Inhalt des Leaky-Bucket.

5. Verfahren nach Anspruch 4, bei welchem die Erhöhung eine Funktion der jeweiligen Transaktion ist.

6. Verfahren nach Anspruch 4 oder Anspruch 5, bei welchem die Transaktionen gleich Echtzeit-Transaktionen sind.

**Revendications**

1. Système de traitement de transaction (SCP) comprenant un compartiment à fente et un moyen de contrôle de flux (i_sw, o_sw), le moyen de contrôle de flux étant arrangé pour contrôler la durée de réponse de chaque transaction et pour comparer chaque durée de réponse avec une durée de réponse prédéterminée, dans lequel au moins deux valeurs différentes de la durée de réponse prédéterminée sont utilisées pour différentes transactions, et pour incrémenter le contenu du compartiment à fente lorsqu'une durée de réponse d'une transaction dépasse la durée de réponse prédéterminée associée à la transaction particulière, et le moyen de contrôle de flux est arrangé pour contrôler le contenu du compartiment à fente et pour rejeter les transactions proportionnellement au contenu du compartiment à fente.

2. Système de traitement de transaction (SCP) selon la revendication 1, dans lequel l'incrément est une fonction de la transaction respective.

3. Système de traitement de transaction (SCP) selon la revendication 1 ou la revendication 2, dans lequel lesdites transactions sont des transactions en temps réel.

4. Procédé d'utilisation d'un système de traitement de transaction (SCP), le système de traitement comprenant un compartiment à fente et un moyen de contrôle de flux (i_sw, o_sw), le procédé comprenant les étapes consistant à :

(a) contrôler la durée de réponse de chaque transaction ;
(b) comparer chaque durée de réponse avec une durée de réponse prédéterminée, dans lequel au moins deux valeurs différentes de durée de réponse prédéterminée sont utilisées pour différentes transactions ;
(c) incrémenter le contenu du compartiment à fente lorsqu'une durée de réponse d'une transaction dépasse la durée de réponse prédéterminée associée à la transaction particulière ; et
(d) contrôler le contenu du compartiment à fente et rejeter les transactions proportionnellement au contenu du compartiment à fente.

5. Procédé selon la revendication 4, dans lequel l'incrément est une fonction de la transaction respective.

6. Procédé selon la revendication 4 ou la revendication 5, dans lequel lesdites transactions sont des transactions en temps réel.

100% rejected

75% rejected

50% rejected

25% rejected

0% rejected

All traffic
accepted

Approx level for maximum normal load

Figure 1

Figure 2

Figure 4

Figure 3

**Figure 5.**

**Figure 6.**

Figure 7A

Figure 7B.

Figure 8A

Figure 8B.

Figure 9A

Figure 9B

Figure 9C

Figure 10A

Figure 10B

Figure 10C

Figure 10D

**Figure 11.**

Figure 12A

Figure 12B

Figure 12C

Figure 13A

Figure 13 B

Figure 13C

Figure 14A

Figure 14B